# EUROPÄISCHE PATENTSCHRIFT

(11) **EP 0 832 797 B1**
(45) Veröffentlichungstag und Bekanntmachung des Hinweises auf die Patenterteilung: **19.01.2005**
(21) Anmeldenummer: 97110005.2
(22) Anmeldetag: 19.06.1997
(51) Int. Cl.: B60S 1/04, B60S 1/34

(54) **Wischeranlage mit Kunststoff-Wischerlagern**
Windscreen wiper with plastic bearing for wiper shaft
Essuie-glace avec palier en plastique pour arbre d'essuyage

(30) Priorität: 26.09.1996 DE 19639559
(43) Veröffentlichungstag der Anmeldung: 01.04.1998
(73) Patentinhaber: ROBERT BOSCH GMBH, 70442 Stuttgart (DE)
(72) Erfinder: Kuehbauch, Gerd, 77830 Buehlertal (DE); Boos, Tino, 76532 Baden-Baden (DE)

(56) Entgegenhaltungen:
- EP-A- 0 694 455
- DE-A- 2 920 899
- FR-A- 2 724 890

## Beschreibung

Die Erfindung betrifft eine Antriebsvorrichtung, insbesondere für Scheibenwischer an Kraftfahrzeugen, gemäß Oberbegriff des Hauptanspruchs.

### Stand der Technik

Antriebsvorrichtungen für Scheibenwischer an Kraftfahrzeugen sind bekannt. Diese umfassen im allgemeinen eine auch als Blechplatine bezeichnete Haltevorrichtung, die aus einem als Rohr ausgeführten Halteelement mit aufgeschweißtem Motorhalter aufgebaut ist. Der Motorhalter dient der Aufnahme und Befestigung des für den Antrieb der Wischanlage nötigen Motors. Das Halteelement ist ortsfest an der Karosserie des Kraftfahrzeuges befestigt und trägt an seinen beiden freien Enden Lager zur Aufnahme von jeweils einer Wischerwelle, an der der Wischerarm mit Wischerblatt befestigt ist. Herkömmlicherweise werden die Stutzen aufweisenden Lager für die Wischerwelle in das rohrförmige Halteelement bereichsweise eingeführt und dort mittels eines sogenannten Crimp-Vorgangs, also eines Quetschvorgangs, durch Formschluß befestigt. Als nachteilig erweist sich die mit erhöhten Kosten verbundene, vergleichsweise aufwendige Durchführung des Verbindungsprozesses zwischen Lager und Halteelement. Eine gattungsgemässe Antriebsvorrichtung ist aus FR-A-2 724 890 bekannt.

### Vorteile der Erfindung

Die Erfindung betrifft eine Antriebsvorrichtung, insbesondere für Scheibenwischer an Kraftfahrzeugen, mit einem ortsfest angeordneten Halteelement, das wenigstens an einem seiner beiden freien Enden ein Lager zur Aufnahme einer Wischerwelle aufweist, wobei das Lager auf mindestens ein freies Ende des Halteelementes mittels Spritzgußtechnik aufgebracht, insbesondere aufgespritzt ist.

Die erfindungsgemäß vorgesehene Ausführung des mittels Spritzgußtechnik auf einem oder beiden Enden des Halteelementes aufgebrachten Lagers führt zu einer spielfreien Verbindung zwischen Lager und Halteelementende, womit eine höhere Stabilität sowie eine geringere Verschleißanfälligkeit ermöglicht wird. Durch das Umspritzen des Halteelementendes wird die Stabilität des vorzugsweise aus Kunststoff gefertigten Lagers deutlich erhöht. Demgemäß ist der Einsatz von Lagern aus Kunststoff auch in Fällen möglich, in denen bisher aus Stabilitätsgründen nur Lager aus Metall verwendet wurden.

Ferner sieht die Erfindung vor, daß das Ende des Halteelementes, auf den das Lager gespritzt werden soll, so ausgebildet ist, daß ein Verschieben, Abziehen oder Verdrehen des Lagers auf beziehungsweise von dem Halteelement unmöglich ist. Die Erfindung sieht demgemäß vor, die oder das Ende(n) des Halteelementes konisch zu verbreitern, das heißt am Ende des Halteelementes einen Außenumfang vorzusehen, der größer als der Außenumfang des Halteelementes in dessen Mittelteil ist. Das auf ein derart ausgeführtes Halteelementende aufgebrachte Lager kann nicht von dem Halteelement abgezogen werden. Zudem kann in vorteilhafter Weise das Ende des Halteelementes Bohrungen oder Kerben aufweisen, in die Spritzgut eindringen kann. Damit wird eine ortsfeste Fixierung des Lagers auf dem Rohrende auch hinsichtlich einer Verschiebung in Richtung des Mittelteils des Halteelementes erreicht. Die Zahl der Bohrungen kann dabei je nach Ausführung der Vorrichtung variiert werden und liegt vorteilhafter Weise in einem Bereich von 2 bis 16 Bohrungen pro Ende eines Halteelementes.

Die Erfindung sieht ferner vor, das Ende des Halteelementes so zu verformen, daß eine Verdrehung des Lagers in Umfangsrichtung um das Halteelement nicht mehr möglich ist. Das Ende des Halteelementes wird zu diesem Zweck vorteilhafter Weise so verformt, insbesondere zusammengedrückt, daß die Wandungen des vorzugsweise hohl ausgeführten Halteelementes aufeinander zu liegen kommen, das heißt, daß das Ende des Halteelementes verschlossen ist und im Querschnitt durch die aufeinander gepreßten Wandungen ein M-förmiges, S-förmiges, umgekehrt S-förmiges, wellenförmiges, sternförmiges oder I-förmiges Profil gebildet wird. Insbesondere ist es von Bedeutung, die möglicherweise unterschiedlichen Temperaturausdehnungskoeffizienten von dem vorzugsweise aus Stahl gefertigten Halteelement und dem vorzugsweise aus Kunststoff gefertigten Lager zu berücksichtigen. Demgemäß muß das Ende des Halteelementes so ausgeführt sein, daß bei hohen und niedrigen Temperaturen stets ein festsitzendes Lager gewährleistet ist. Dies wird durch die erfindungsgemäß vorgesehenen, speziell ausgebildeten, zusammengedrückten Enden der Halteelemente erreicht. Im Querschnitt oder in Sichtweise auf die Stirnseite eines Endes wird ein Profil gebildet, das vorzugsweise Biegungen oder Wellen aufweist, so daß bei tiefen Temperaturen der Kunststoff auf der Außenseite des Profils zusammengezogen wird und damit einen festen Halt des Lagers garantiert. Bei hohen Temperaturen wird der sich ausdehnende Kunststoff gleichsam von innen stärker an das Wellenprofil gepreßt, so daß auch unter diesen Bedingungen ein festsitzendes Lager gewährleistet wird.

Die Erfindung sieht in vorteilhafter Weise vor, daß das Ende des Halteelementes, auf den das Lager aufgespritzt wird, verschlossen, insbesondere zusammengedrückt ist. Dadurch wird vermieden, daß Spritzgut ins Rohrinnere gelangt.

Weitere vorteilhafte Ausgestaltungen der Erfindung sind den Unteransprüchen zu entnehmen.

### Zeichnungen

Die Erfindung wird anhand der Ausführungsbeispiele mit Bezug auf die Zeichnungen näher erläutert. Dabei zeigen:
- Figur 1: eine Seitenansicht einer erfindunggemäßen Antriebsvorrichtung,
- Figur 2: einen Längsschnitt durch das Ende eines Halteelementes,
- Figur 3: einen Längsschnitt durch das Ende eines Halteelementes mit einem aufgespritzten Wischerlager,
- Figur 4a: das zusammengedrückte Ende eines Halteelementes in Seitenansicht,
- Figur 4b: eine Draufsicht auf den Gegenstand der Figur 4a,
- Figur 4c: eine Draufsicht auf die Stirnseite des Gegenstands der Figur 4a,
- Figur 4d: einen Querschnitt durch den Gegenstand der Figur 4a,
- Figur 5a: eine Draufsicht auf die Stirnseite des Gegenstandes der Figur 5b,
- Figur 5b: eine Seitenansicht einer weiteren Ausführungsform eines Endes eines Halteelementes,
- Figur 6a: eine Draufsicht auf die Stirnseite des Gegenstandes der Figur 6b,
- Figur 6b: eine Seitenansicht eines weiteren Ausführungsbeispiels eines Endes eines Halteelementes,
- Figur 7a: eine Seitenansicht eines weiteren Ausführungsbeispiels eines Endes eines Halteelementes,
- Figur 7b: eine schematische Darstellung eines mit einem Lager versehenen Halteelementendes gemäß Figur 7a,
- Figur 8a: ein weiteres Ausführungsbeispiel eines Halteelementendes und
- Figur 8b: eine Draufsicht auf die Stirnseite des Gegenstandes gemäß Figur 8a.

### Ausführungsbeispiele

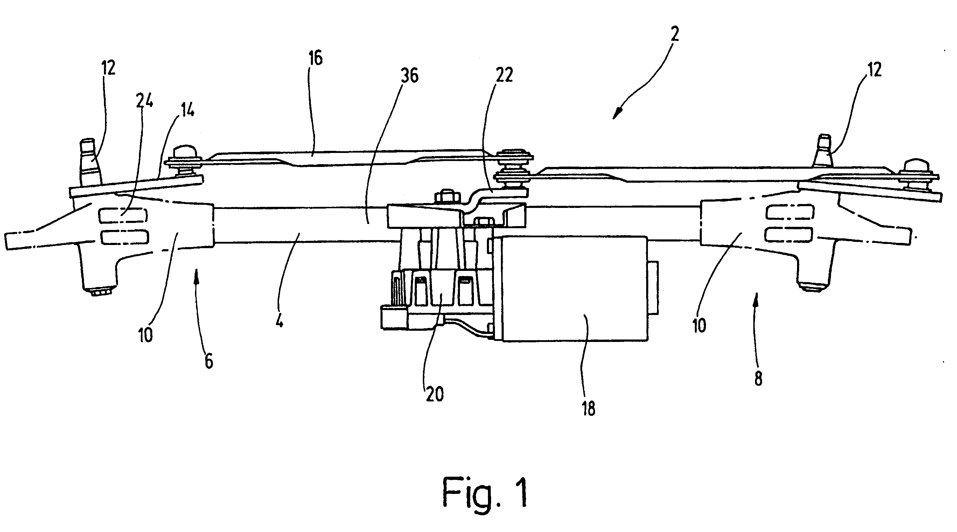

Die Figur 1 zeigt eine erfindungsgemäße Antriebsvorrichtung 2 für Scheibenwischer an Kraftfahrzeugen. Die Antriebsvorrichtung 2 weist ein rohrförmig ausgebildetes hohles Halteelement 4 auf, das ortsfest in einem Kraftfahrzeug angeordnet ist. Hierzu ist das Halteelement 4 an seinen beiden freien Enden 6 und 8 jeweils mit einem Lager 10 für eine Wischerwelle 12 versehen. Die aus Kunststoff bestehenden Lager 10 sind auf die freien Enden 6 und 8 des Halteelementes 4 mittels Spritzgußtechnik aufgespritzt, wobei in dem Lager 10 Aussparungen 24 zur Materialeinsparung vorgesehen sind. Die Wischerwelle 12 ist drehbeweglich, jedoch axial festgelegt angeordnet. Sie ragt beidseitig über das Lager 10 hinaus, wobei an dem einen Ende der Wischerwelle 12 ein Kupplungsgestänge angreift. Das Kupplungsgestänge umfaßt eine erste Kupplungsstange 14 und eine zweite Kupplungsstange 16, die drehbeweglich miteinander verbunden sind. Die Kupplungsstange 14 ist drehfest mit der Wischerwelle 12 verbunden. Ferner weist die Antriebsvorrichtung 2 einen Antriebsmotor 18 auf, der über ein Getriebe 20 eine Kurbel 22 antreibt. Die Kurbel 22 ist mit den Kupplungsstangen 16 verbunden.

Das zweite, in Figur 1 nicht sichtbare, Ende der Wischerwelle 12 trägt einen ein Wischerblatt aufweisenden Wischerarm.

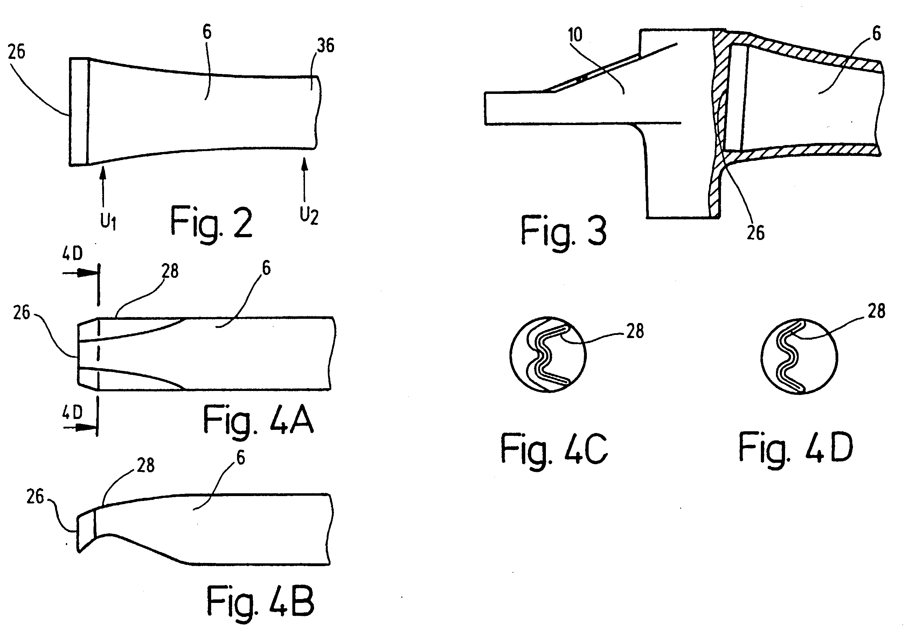

Die Figur 2 stellt einen Längsschnitt durch ein freies Ende 6 eines Halteelementes 4 dar. Der Figur 2 ist zu entnehmen, daß der Umfang U1 am Ende 6 des Halteelementes 4 größer als der Umfang U2 im Mittelbereich 36 des Halteelementes 4 ist. Das Ende 6 des Halteelementes 4 weist eine konische Verbreiterung auf und ist zusammengedrückt, so daß an seiner Stirnseite 26 keine Öffnung mehr verbleibt, durch die Spritzgut eindringen könnte.

Die Figur 3 verdeutlicht die Anordnung des Lagers 10 an dem freien Ende 6 des Halteelementes 4. Das aus Kunststoff gefertigte Lager 10 wird auf das Ende 6 gespritzt, so daß eine spielfreie Verbindung zwischen Lager 10 und Halteelement 4 gewährleistet ist. Das Lager 10 läßt sich nicht vom Ende 6 abziehen, da dieses aufgrund seiner konisch ausgeführten Verbreiterung im Lager 10 fixiert ist. Da das Rohrende 6 zusammengedrückt ist, kann durch seine Stirnseite 26 kein Spritzgußmaterial in das Halteelement 4 eindringen.

Die Figur 4a zeigt die Seitenansicht eines weiteren Halteelementendes 6. Dieses wurde ebenfalls zusammengedrückt, so daß die Stirnseite 26 keinerlei Öffnungen mehr aufweist. Das Zusammendrücken wurde derart ausgeführt, daß sich die in Figur 4b in Draufsicht dargestellte Form des Endes 6 ergibt. Da durch das Zusammendrücken die Wandungen 28 des Halteelementes 4 aufeinander zu liegen kommen, ergibt sich in Draufsicht auf die Stirnseite 26 oder im Querschnitt durch das Ende 6 ein charakteristisches Profil der Wandungsflächen. Dieses Profil weist eine M-Form auf. Die M-Form des Profils wird auch noch einmal im Querschnitt durch das Ende 6 deutlich (Figur 4d). Das in dieser Form zusammengedrückte Rohrende 6 weist also Wellen und Biegungen auf, die eine Stabilität des auf das Ende 6 aufgespritzten Lagers 10 gegenüber Verdrehen gewährleistet. Zusätzlich wird durch die Wellenstruktur der unterschiedliche Temperaturausdehnungskoeffizient von Kunststoff und Metall genutzt, um eine auch größeren Beanspruchungen über große Temperaturbereiche standhaltende Verbindung zu schaffen.

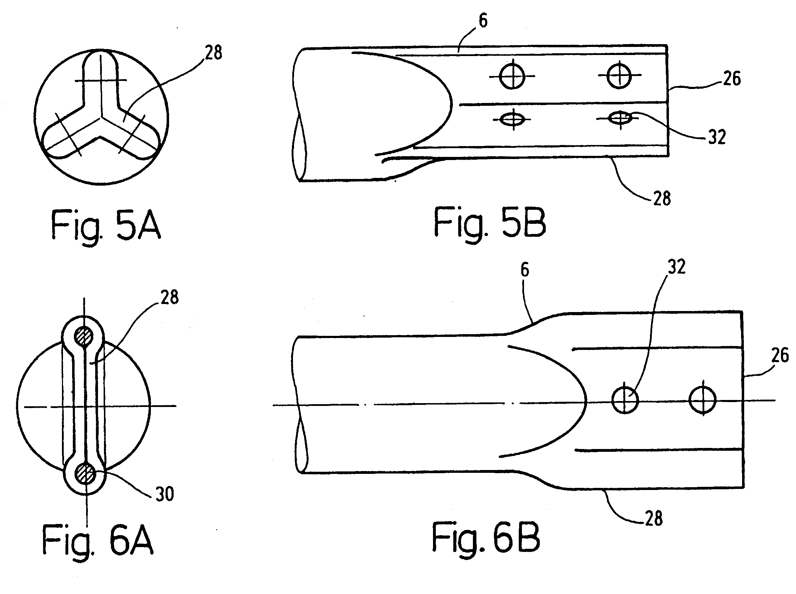

Die Figuren 5a und 5b verdeutlichen eine weitere Ausführungsform eines Halteelementendes 6. Das Ende 6 wurde so zusammengepreßt, daß die Wandungen 28 des Endes 6 in Draufsicht auf die Stirnseite 26 in Drei-Sternform aufeinander zu liegen kommen (Figur 5a). Selbstverständlich sind auch andere Sternformen des zusammengedrückten Endes 6 möglich. Diese gewährleisten in jedem Fall eine gute Stabilität gegenüber Verdrehen des Lagers 10. Zusätzlich sind im Ende 6 Bohrungen 32 vorgesehen. Die Bohrungen 32 dienen dazu, eine zusätzliche Abziehsicherung bereitzustellen, da das Spritzgut in die Bohrungen eindringt und das Lager 10 auf dem Ende 6 fixiert.

Die Figur 6 verdeutlicht eine weitere Ausführungsform eines Endes 6 des Halteelementes 4. Das Ende 6 wurde von zwei Seiten mit gleichmäßem Druck eben zusammengedrückt, so daß sich keine Biege- oder Wellenstruktur der zusammengepreßten Wandungen 28 ergibt. Dargestellt sind zwei in oberer und unterer Kante des zusammengedrückten Endes 6 eingearbeitete Stifte, beispielsweise Drähte, die zur Stabilisierung des Eck- und Kantenradius dienen. Selbstverständlich betrifft die Erfindung jedoch auch Ausführungsformen ohne diese zusätzlichen Stabilisierungsmaßnahmen. Auch in einer solchen Ausführungsform, die ebenfalls Bohrungen 32 aufweist, ist eine Verdreh- und Abziehsicherung vorhanden.

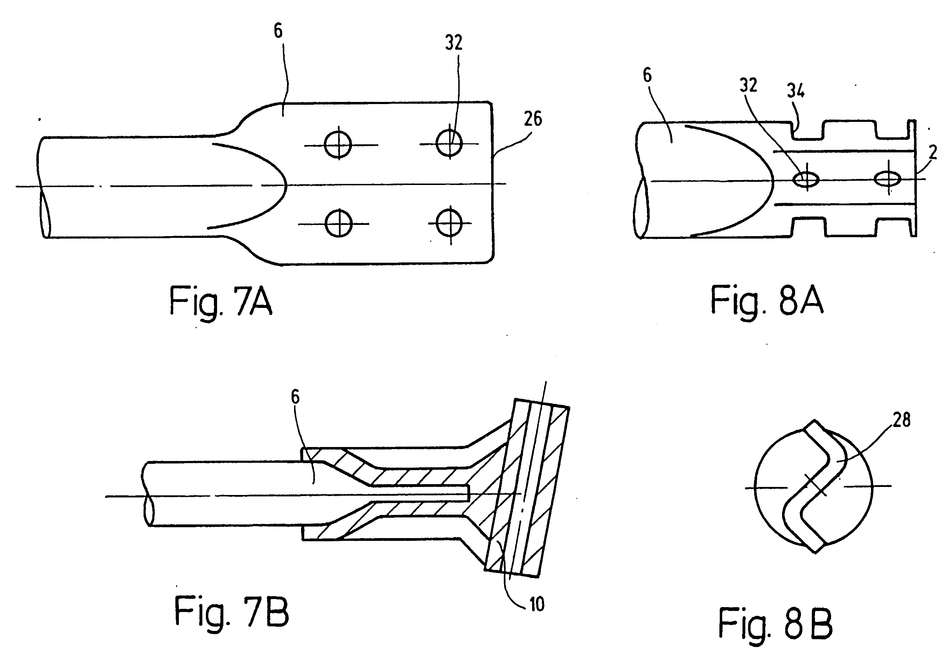

Die Figur 7 verdeutlicht eine derartige Ausführungsform eines Endes 6 eines Halteelementes 4. Das Ende 6 wurde eben zusammengedrückt und mit Bohrungen 32 versehen. Die Figur 7b verdeutlicht schematisch in Draufsicht die Anordnung des Lagers 10 auf dem zusammengedrückten Ende 6 des Halteelementes 4.

Eine weitere Ausführungsform der Erfindung, insbesondere des Endes 6 des Halteelementes 4, wird in der Figur 8 verdeutlicht. Das Ende 6 wurde so zusammengedrückt, daß sich in Draufsicht auf die Stirnseite 26 ein umgekehrt-S-förmiges Profil der Wandungen 28 ergibt. Als zusätzliche Verschiebesicherung sind im Ende 6 Kerben 34 vorgesehen, die das Lager 10 auf dem Ende 6 besonders fest arretieren.

Weitere Ausgestaltungen des Endes 6 des Halteelementes 4 sind ebenfalls im Umfang der Erfindung enthalten, wobei die Enden 6 lediglich so gestaltet sein müssen, daß eine verschiebe- und verdrehgesicherte Lagerung des Lagers 10 auf dem Ende 6 gewährleistet ist.

## Patentansprüche

1. Antriebsvorrichtung, insbesondere für Schebenwischer an Kraftfahrzeugen, mit einem ortsfest angeordneten Halteelement, das wenigstens an einem seiner beiden freien Enden ein Lager zur Aufnahme einer Wischerwelle aufweist, und das Lager (10) auf dem mindestens einen freien Ende (6) des Halteelementes (4) aufgespritzt ist ,
**dadurch gekennzeichnet, daß** das mindestens eine freie Ende (6) des Halteelementes (4) einen gegenüber dessen Mittelteil (36) vergrößerten Außenumfang (U₁) aufweist.

2. Antriebsvorrichtung, insbesondere für Scheibenwischer an Kraftfahrzeugen, mit einem ortsfest angeordneten Halteelement, das wenigstens an einem seiner beiden freien Enden ein Lager zur Aufnahme einer Wischerwelle aufweist, und das Lager (10) auf dem mindestens einen freien Ende (6) des Halteelementes (4) aufgespritzt ist,
**dadurch gekennzeichnet, daß** das mindestens eine freie Ende (6) des Halteelementes (4) so ausgebildet ist, daßdie Stirnseite (26) des Halteelementes (4) ein M-förmiges, ein S-förmiges, ein umgekehrt-S-förmiges, ein wellenförmiges, ein sternförmiges oder ein I-förmiges Profil aufweist.

3. Antriebsvorrichtung nach einem der vorhergehenden Ansprüche, **dadurch gekennzeichnet, daß** das mindestens eine freie Ende (6) des Halteelementes (4) geschlossen ist.

4. Antriebsvorrichtung nach einem der vorhergehenden Ansprüche, **dadurch gekennzeichnet, daß** das mindestens eine freie Ende (6) des Halteelementes (4) so ausgebildet ist, daß ein Abziehen und/oder Verdrehen des aufgespritzten Lagers (10) nicht möglich ist

5. Antriebsvorrichtung nach einem der vorhergehenden Ansprüche, **dadurch gekennzeichnet, daß** das mindestens eine freie Ende (6) des Halteelementes (4) Bohrungen (32) aufweist.

6. Antriebsvorrichtung nach einem der vorhergehenden Ansprüche, **dadurch gekennzeichnet, daß** das mindestens eine freie Ende (6) des Halteelementes (4) mit Kerben (34) versehen ist.

7. Antriebsvorrichtung nach einem der vorhergehenden Ansprüche, **dadurch gekennzeichnet, daß** das Halteelement (4) rohrförmig ist.

8. Antriebsvorrichtung nach einem der vorhergehenden Ansprüche, **dadurch gekennzeichnet, daß** das Lager (10) im wesentlichen aus Kunststoff und das Halteelement (4) im wesentlichen aus Metall besteht.

## Claims

1. Driving device, in particular for wipers on motor vehicles, having a retaining element which is arranged in a positionally fixed manner and has, at least at one of its two free ends, a bearing for holding a wiper shaft, and the bearing (10) is moulded onto the at least one free end (6) of the retaining element (4), **characterized in that** the at least one free end (6) of the retaining element (4) has an outer circumference (U₁) which is enlarged with respect to its central part (36).

2. Driving device, in particular for wipers on motor vehicles, having a retaining element which is arranged in a positionally fixed manner and has, at least at one of its two free ends, a bearing for holding a wiper shaft, and the bearing (10) is moulded onto the at least one free end (6) of the retaining element (4), **characterized in that** the at least one free end (6) of the retaining element (4) is designed in such a manner that the end side (26) of the retaining element (4) has an M-shaped, an S-shaped, an inverted S-shaped, an undulating, a star-shaped or an I-shaped profile.

3. Driving device according to one of the preceding claims, **characterized in that** the at least one free end (6) of the retaining element (4) is closed.

4. Driving device according to one of the preceding claims, **characterized in that** the at least one free end (6) of the retaining element (4) is designed in such a manner that the moulded-on bearing (10) cannot be pulled off and/or twisted.

5. Driving device according to one of the preceding claims, **characterized in that** the at least one free end (6) of the retaining element (4) has holes (32).

6. Driving device according to one of the preceding claims, **characterized in that** the at least one free end (6) of the retaining element (4) is provided with notches (34).

7. Driving device according to one of the preceding claims, **characterized in that** the retaining element (4) is tubular.

8. Driving device according to one of the preceding claims, **characterized in that** the bearing (10) consists essentially of plastic and the retaining element (4) consists essentially of metal.

## Revendications

1. Dispositif d'entraînement, en particulier pour essuie-glace de véhicules automobiles, comportant un élément de maintien fixe qui, au moins sur l'une de ses deux extrémités libres, présente pour la réception d'un arbre d'essuie-glace, un palier (10) injecté sur au moins une extrémité libre (6) de l'élément de maintien (4),
**caractérisé en ce que**
au moins une extrémité libre (6) de l'élément de maintien (4) présente par rapport à sa partie centrale (36) une périphérie extérieure (U₁) augmentée.

2. Dispositif d'entraînement, en particulier pour essuie-glace de véhicules automobiles, comportant un élément de maintien fixe qui, au moins sur l'une de ses deux extrémités libres, présente pour la réception d'un arbre d'essuie-glace, un palier (10) injecté sur au moins une extrémité libre (6) de l'élément de maintien (4),
**caractérisé en ce que**
au moins une extrémité libre (6) de l'élément de maintien (4) est constituée de manière telle que le côté frontal (26) de l'élément de maintien (4) présente un profil en forme de M, en forme de S, en forme de S inversé, de forme ondulée, en forme d'étoile ou en forme de I.

3. Dispositif d'entraînement selon l'une quelconque des revendications précédentes,
**caractérisé en ce que**
au moins une extrémité libre (6) de l'élément de maintien (4) est fermée.

4. Dispositif d'entraînement selon l'une quelconque des revendications précédentes,
**caractérisé en ce que**
au moins une extrémité libre (6) de l'élément de maintien (4) est constituée de manière telle qu'il n'est pas possible d'ôter le palier (10) injecté en le faisant coulisser ou en le tordant.

5. Dispositif d'entraînement selon l'une quelconque des revendications précédentes,
**caractérisé en ce que**
l'au moins une extrémité libre (6) de l'élément de maintien (4) présente des perçages (32).

6. Dispositif d'entraînement selon l'une quelconque des revendications précédentes,
**caractérisé en ce que**
au moins une extrémité libre (6) de l'élément de maintien (4) est pourvue d'entailles (34).

7. Dispositif d'entraînement selon l'une quelconque des revendications précédentes,
**caractérisé en ce que**
l'élément de maintien (4) est tubulaire.

8. Dispositif d'entraînement selon l'une quelconque des revendications précédentes,
**caractérisé en ce que**
le palier (10) est pour l'essentiel en matière synthétique et l'élément de maintien (4) pour l'essentiel en métal.
